# EUROPEAN PATENT APPLICATION

(11) **EP 2 351 802 A1**
(43) Date of publication of application: **03.08.2011**
(21) Application number: 09813274.9
(22) Date of filing: 08.07.2009
(51) Int. Cl.: C09D 133/04, C09D 5/00, C09K 3/18

(54) **WATER-BASED IMPERMEABILIZATION COMPOSITION FOR COATING DIVERSE SUBSTRATES**

(30) Priority: 12.09.2008 MX 2008011693
(71) Applicant: Polímeros, Adhesivos Y Derivados, S.a. De C.v., Nuevo León (MX)
(72) Inventor: RODRÍGUEZ CANTÚ, Ricardo, Nuevo León (MX)
(74) Representative: Pouillot, Laurent Pierre Paul
(86) International application number: PCT/MX2009/000063
(87) International publication number: WO 2010/030154

(57) **Abstract**

The present invention refers to a water-based impermeabilization composition for coating diverse substrates, **characterized in** being formulated based on elastomeric acrylic comprising a mechanically reinforcing fibre of an elastic material from fibre processing for thread which, once applied and dry, conserves its elongation properties, comprising a binder resin comprising a styrene-acrylic emulsion resin, film-forming coalescent comprising pentanediol solvent, rheological modifier comprising a water-based acrylic thickener, stabilizing dispersant comprising a polyacrylic salt, preservative comprising a solution of formaldehyde, pH regulator comprising a solution of ammonium hydroxide, humectant comprising an alkylphenol, diluent comprising industrial water, foam regulator being an emulsion of wax and naphtha, drying regulator being a glycolic solvent, fillers and extenders comprising calcium carbonate, and elastic mechanical reinforcement comprising elastic fibres, water softener comprising phosphate salt and pigment selected from white pigment such as titanium dioxide or terracotta red such as red and/or yellow iron oxide.

## Description

### FIELD OF THE INVENTION

The present invention generally concerns the chemical industry, in particular the coating industry, and more specifically the production of waterproofing compositions for roofing and various civil construction elements.

### PRIOR ART

The products currently known in the market are fibreless elastomeric acrylic waterproof coatings characterized in that a reinforcing fabric strip is laid into the first coat before drying, and in that a second coat is applied after the first coat has dried. Other known compositions contain fibrous reinforcing materials composed of non-elastic polyester or cellulose fibers, as well as scrap tire rubber fibers, among others.

Most of the reinforcing fibers currently available in the market are acrylic, polyester, polypropylene, nylon, cellulose and glass fibers, among others, and have proven to be very rigid, i.e. flexible but non-elastic.

Current waterproofing compositions require the application of a reinforcing fabric, thereby increasing the cost of the application process and materials, as well as the application time, and imposing the need for specialized personnel. Climatically induced variations in temperature and relative humidity, frequent heavy precipitation events during rainy seasons, etc. cause rapid deterioration and rupture of the reinforcing fibers.

Moreover, under dry conditions, the waterproofing composition loses its elasticity and the reinforcing fabric ruptures, causing the formation of grooves or cracks in the waterproofing surface layer, which in turn causes seepage through the previously waterproofed surface.

From the above description, it is readily understood that an elastomeric acrylic waterproofing composition that solves the above-mentioned problems while exhibiting superior durability and elasticity, ease of application and improved performance and efficiency would offer major advantages over currently available waterproofing compositions.

### OBJECTIVES OF THE INVENTION

The main objective of the present invention is to provide an elastomeric acrylic waterproofing composition that can be easily applied without the need for specialized personnel and without the use of reinforcing fibers.

Another objective of the present invention is to provide said elastomeric acrylic waterproofing composition, further characterized in that its elongation properties and physical and chemical properties are maintained under high temperature and low relative humidity conditions.

Another objective of the present invention is to provide said elastomeric acrylic waterproofing composition, further characterized in that no additional reinforcing fabric is required to offer good performance and efficiency.

Another objective of the present invention is to provide said elastomeric acrylic waterproofing composition, further characterized in that it allows for shorter application times.

Yet another objective of the present invention is to provide said elastomeric acrylic waterproofing composition, further characterized in that it can be used in all types of climates due to its ability to withstand extreme temperatures without losing its properties.

Yet another objective of the present invention is to provide said elastomeric acrylic waterproofing composition, further characterized in that no additional product is required to achieve excellent waterproofing of various substrates.

Yet another objective of the present invention is to provide said elastomeric acrylic waterproofing composition, further characterized in that it efficiently prevents the penetration of water and humidity.

The foregoing and other objectives and advantages of the present invention will become readily apparent from the general and detailed description that follows of preferred illustrative embodiments.

### DESCRIPTION OF THE INVENTION

Generally speaking, the claimed waterproofing composition is an elastomeric acrylic waterproofing composition comprising a mechanical reinforcing fiber made of an elastic material derived from a thread fiber manufacturing process, which once applied and dry maintains its elongation properties.

The fundamental aspect of the elastomeric acrylic waterproofing composition is the use of elastic fibers of any size and length.

The primary function of the elastomeric acrylic waterproofing composition is to waterproof concrete, polyurethane, laminate or wood and asbestos roofs.

The composition is designed to be used without reinforcing fabric, thereby eliminating this step, leaving only the steps of applying a single coat on the surface of the previously sealed substrate, allowing it to dry, and then possibly applying a second coat.

The waterproofing composition preferably comprises a binder resin, a film-forming coalescing agent, a rheological modifier, a stabilizing dispersant, a preservative, a pH regulator, a humectant, a diluent, a foam regulator, a drying regulator, fillers and extenders, and a mechanical elastic reinforcement.

The waterproofing composition may also include a water softening agent and pigments.

The binder resin preferably consists of a 50% styrenated acrylic emulsified resin, the film-forming coalescing agent preferably consists of a pentanoid solvent, the rheological modifier consists of a water-based acrylic thickener, the stabilizing dispersant consists of polyacrylic salt, the preservative consists of a formaldehyde solution, the pH regulator consists of a 28% ammonium hydroxide solution, the humectant consists of alkyl phenol, the diluent consists of industrial-grade water, the foam regulator is an emulsion of wax and naphtha, the drying regulator is a glycolic solvent, the fillers and extenders consist of calcium carbonate, and the mechanical elastic reinforcement consists of elastic fibers. The water softening agent consists of phosphate salt and the pigment may be a white pigment such as titanium dioxide or a terracotta red pigment such as red and/or yellow iron oxide.

The following table lists the components of the waterproofing composition and their respective functions.

| COMPONENT | FUNCTION |
|---|---|
| Industrial-grade water | Diluent |
| Alkyl phenol | Humectant |
| Titanium dioxide | White pigment |
| Calcium carbonate | Filler and extender |
| Emulsion of wax and naphtha | Foam regulator |
| Water-based acrylic thickener | Rheological modifier |
| Elastic fiber | Mechanical reinforcement |
| 50% styrenated acrylic emulsified resin | Binder resin |
| Phosphate salt | Water softening agent |
| Polyacrylic salt | Stabilizing dispersant |
| 37% formaldehyde solution | Preservative |
| 28% ammonium hydroxide solution | pH regulator |
| Glycolic solvent | Drying regulator |
| Pentanoid solvent | Film-forming coalescing agent |

The waterproofing composition preferably has the following quantitative composition, with a distinction made between two different qualities:

| COMPONENTS OF THE WATERPROOFING COMPOSITION | | MEGA QUALITY | ULTRA QUALITY |
|---|---|---|---|
| COMPONENTS | QUANTITY weight percent range | QUANTITY exact weight percent value | QUANTITY exact weight percent value |
| 1. Industrial-grade water | 20.00-28.00 | 26.85 | 22.05 |
| 2. Alkyl phenol | 0.03 - 0.30 | 0.05 | 0.05 |
| 3. Titanium dioxide | 0.00 - 10.00 | 2.30 | 5.50 |
| 4. Calcium carbonate | 20.00 - 40.00 | 34.00 | 29.30 |
| 5. Emulsion of wax and naphtha | 0.20 - 1.00 | 0.40 | 0.40 |
| 6. Water-based acrylic thickener | 0.50 - 2.00 | 1.00 | 1.00 |
| 7. Elastic fiber | 0.50 - 3.00 | 1.00 | 1.00 |
| 8. Water-based emulsified resin* | 20.00 - 55.00 | 31.50 | 38.00 |
| 9. Phosphate salt | 0.01 - 0.50 | 0.05 | 0.05 |
| 10. Polyacrylic salt | 0.01 - 2.00 | 0.05 | 0.05 |
| 11. Formaldehyde solution, 37% | 0.10 - 0.80 | 0.20 | 0.20 |
| 12_{.} Ammonium hydroxide solution, 28% | 0.10 - 0.80 | 0.40 | 0.40 |
| 13. Glycolic solvent | 0.00 - 5.00 | 1.10 | 1.00 |
| 14. Pentanoid solvent | 0.00 - 3.00 | 1.10 | 1.00 |
| Total weight percent | | 100 | 100 |

| | | | |
|---|---|---|---|
| * The water-based emulsified resin may be of pure acrylic and/or styrenated acrylic type, as well as any type of elastomeric resin used to formulate waterproofing compositions. | | | |

The composition may also include red and/or yellow iron oxide to give it a terracotta red color: in a quantity ranging from 0.00 to 5.00% by weight, 3.20% by weight for the Mega quality composition, and 3.20% by weight for the Ultra quality composition.

The elastic fiber used as a mechanical reinforcement is selected among elastane fibers, gum fibers (binder type), neoprene fibers, natural or synthetic rubber fibers, as well as other natural or synthetic elastic fibers, where the term elastic fibers is understood as referring to fibers that stretch without breaking and return to their initial state when relaxed, despite showing signs of fatigue and failing to recover their original length.

The following table shows the physical and chemical properties of the waterproofing composition for the ULTRA and MEGA qualities:

| PHYSICAL AND CHEMICAL PROPERTIES | ASTM | ULTRA QUALITY | MEGA QUALITY |
|---|---|---|---|
| Density | ASTM D-1475 | 1.32 +/- 0.05 | 1.32 +/- 0.05 |
| Viscosity | ASTM D-2196 | 60 000 - 65 000 cps | 60 000 - 65 000 cps |
| pH | ASTM E-70 | 9 - 10 | 9 - 10 |
| Solids content | ASTM D-1644 | 53% +/- 2% | 52% +/- 2% |
| Elongation | ASTM D-2370 | 200% to 430% | 200% to 550% |
| Stability | ASTM D-1849 | STABLE AT 52°C | STABLE AT 52°C |

The elastomeric acrylic material used in the waterproofing composition is an emulsified resin composed of acrylic monomers and having the following physical and chemical properties:

| PHYSICAL AND CHEMICAL PROPERTIES | ASTM | EMULSIFIED RESIN ** |
|---|---|---|
| Density | ASTM D-1475 | 1.00 +/- 0.05 |
| Viscosity | ASTM D-2196 | 1000 - 25 000 cps |
| pH | ASTM E-70 | 3 - 10 |
| Solids content | ASTM D-1644 | 53% +/- 2% |
| Elongation | ASTM D-2370 | > 600% |
| Stability | ASTMD-1849 | STABLE AT 52°C |

| | | |
|---|---|---|
| ** The water-based emulsified resin may be of pure acrylic and/or styrenated acrylic type, as well as any type of elastomeric resin used to formulate waterproofing compositions. | | |

The invention has been sufficiently described so that a person with average knowledge of the subject matter may reproduce and obtain the results mentioned herein. Nonetheless, any person competent in the technical field of the present invention may be capable of making modifications not described herein, and in cases where such modifications of a given structure or the manufacturing process itself require knowledge of the subject matter of the claims that follow, said structures will need to be included within the scope of the invention.

Hving sufficiently described the nature of the invention, the contents of the following claims are claimed as property.

## Claims

1. Water-based waterproofing composition for coating various substrates,
**characterized in that** it consists of an aqueous dispersion of an elastomeric acrylic copolymer comprising a mechanical reinforcing fibers made of an elastic material derived from a thread fiber manufacturing process, which once applied and dry maintains its elongation properties.

2. Water-based waterproofing composition for coating various substrates, as claimed in claim 1,
**characterized in that** it comprises a binder resin, a film-forming coalescing agent, a rheological modifier, a stabilizing dispersant, a preservative, a pH regulator, a humectant, a diluent, a foam regulator, a drying regulator, fillers and extenders, and a mechanical elastic reinforcement.

3. Water-based waterproofing composition for coating various substrates, as claimed in claim 1,
**characterized in that** it also comprises a water softening agent and pigments.

4. Water-based waterproofing composition for coating various substrates, as claimed in claims 2 and 3,
**characterized in that** the binder resin consists of a styrenated acrylic emulsified resin, the film-forming coalescing agent consists of a pentanoid solvent, the rheological modifier consists of a water-based acrylic thickener, the stabilizing dispersant consists of polyacrylic salt, the preservative consists of a formaldehyde solution, the pH regulator consists of an ammonium hydroxide solution, the humectant consists of alkyl phenol, the diluent consists of industrial-grade water, the foam regulator is an emulsion of wax and naphtha, the drying regulator is a glycolic solvent, the fillers and extenders consist of calcium carbonate, the mechanical elastic reinforcement consists of elastic fibers, the water softening agent consists of phosphate salt, and the pigment is a white pigment such as titanium dioxide or a terracotta red pigment such as red and/or yellow iron oxide.

5. Water-based waterproofing solution for coating various substrates, as claimed in claim 4,
**characterized in that** it contains 20 to 55% of a 50% styrenated acrylic emulsified resin, 0 to 3% of pentanoid solvent, 0.5 to 2% of water-based acrylic thickener, 0.1 to 2% of polyacrylic salt, 0.1 to 0.8% of a 37% formaldehyde solution, 0.1 to 0.8% of a 28% ammonium hydroxide solution, 0.03 to 0.3% of alkyl phenol, 20 to 28% of industrial-grade water, 0.2 to 1% of an emulsion of wax and naphtha, 0 to 5% of glycolic solvent, 20 to 40% of calcium carbonate, 0.5 to 3% of elastic fibers, 0.01 to 0.5% of phosphate salt, 0 to 10% of titanium dioxide, and 0 to 5% of iron oxide.

6. Water-based waterproofing composition for coating various substrates, as claimed in any of the preceding claims,
**characterized in that** said elastic fiber used as a mechanical reinforcement is selected among elastane fibers, gum fibers (binder type), neoprene fibers, natural or synthetic rubber fibers, as well as other natural or synthetic elastic fibers, capable of stretching without breaking despite showing signs of fatigue and failing to recover their original length.

7. Water-based waterproofing composition for coating various substrates, as claimed in claim 6,
**characterized in that** said elastane fibers consist of linear nonwoven fibers composed of a multi- or monofilament segmented polyurethane-urea polymer.

8. Water-based waterproofing composition for coating various substrates, as claimed in claim 7,
**characterized in that** said elastane fibers also comprise additives such as stabilizing agents, pigments and lubricants.

9. Water-based waterproofing composition for coating various substrates, as claimed in claim 8,
**characterized in that** the pigments consist of titanium oxide and/or zinc oxide.

10. Water-based waterproofing composition for coating various substrates, as claimed in claim 8,
**characterized in that** the lubricants consist of silicon oil and/or magnesium stearate.

11. Water-based waterproofing composition for coating various substrates, as claimed in any of the preceding claims,
**characterized in that** the elastomeric acrylic is an emulsified resin composed of acrylic monomers, of pure acrylic and/or styrenated acrylic type, or any type of elastomeric resin.

12. Water-based waterproofing composition for coating various substrates, as claimed in any of the preceding claims,
**characterized in that** the application substrate is selected among concrete, polyurethane, laminate or wood and asbestos substrates.
